# EUROPÄISCHE PATENTANMELDUNG

(11) **EP 4 118 971 A1**
(43) Veröffentlichungstag der Anmeldung: **18.01.2023**
(21) Anmeldenummer: 22184716.3
(22) Anmeldetag: 13.07.2022
(51) Int. Cl.: A22C 11/10, A22C 11/00

(54) **TRENNMASCHINE UND TRANSPORTEINRICHTUNG**

(30) Priorität: 14.07.2021 DE 102021118255
(71) Anmelder: VEMAG Maschinenbau GmbH, 27283 Verden/Aller (DE)
(72) Erfinder: Knodel, Peter, 28876 Oyten (DE); Hoffmann, Peter, 28832 Achim (DE)
(74) Vertreter: Eisenführ Speiser

(57) **Zusammenfassung**

Die Erfindung betrifft eine Trennmaschine (1) umfassend eine Schneideinrichtung (5) und eine kooperierende Transporteinrichtung (7) zum Transportieren von Lebensmittelprodukten (3) in Transportrichtung (T), die mindestens eine Transporteinheit (9, 10) umfasst, mit einem von mindestens einer Umlenkrolle (31) geführten Transportriemen (11), welcher in dem Kontaktbereich (13) mit den Lebensmittelprodukten (3) in Kontakt kommt und mindestens eine Führung (14, 15, 16) zum Führen des Transportriemens (11), wobei die mindestens eine Führung (14, 15, 16) einen ersten Stützabschnitt (27) zum Abstützen des Transportriemens (11) auf einer ersten Höhe (hi) und einen zweiten Stützabschnitt (29) zum Abstützen auf einer zweiten Höhe (h₂) aufweist, wobei die Höhe (hi) und die Höhe (h₂) in einer sich senkrecht zur Transportrichtung (T) erstreckenden Richtung (h) beabstandet sind, und mindestens eine zwischen der ersten Höhe (hi) und der zweiten Höhe (h₂) angeordnete Ausnehmung (25), in welche der Transportriemen (11) aufgrund eines Kontaktes mit Lebensmittelprodukten (3) mindestens teilweise ausweichen kann.

## Beschreibung

Die Erfindung betrifft eine Trennmaschine zum Vereinzeln von Lebensmittelprodukten, insbesondere Wurstketten, welche eine Schneideinrichtung zum Vereinzeln der Lebensmittelprodukte und eine mit der Schneideinrichtung kooperierende Transporteinrichtung zum Transportieren der Lebensmittelprodukte in einer Transportrichtung T umfasst, wobei die Transporteinrichtung mindestens eine Transporteinheit umfasst. Die Transporteinheit weist einen Transportriemen, welcher sich in einem Kontaktbereich zumindest abschnittsweise in Transportrichtung T erstreckt und dazu eingerichtet ist, in dem Kontaktbereich mit den Lebensmittelprodukten in Kontakt zu kommen, mindestens eine Umlenkrolle zum Führen des Transportriemens, und mindestens eine Führung zum Führen des Transportriemens in Kontaktbereich auf.

Die Erfindung betrifft ferner eine Transporteinrichtung für eine solche Trennmaschine und eine Nahrungsmittelmaschine mit einer solchen Trennmaschine.

Trennmaschinen der eingangs genannten Art sind allgemein bekannt. Sie werden beispielsweise gemeinsam mit einer Füllmaschine und eine Portioniereinrichtung verwendet, um Würstchenketten herzustellen und zu vereinzeln. Dabei wird ein pastöses Lebensmittel, welches ein Wurstbrät oder eine vegetarische Alternative umfassen kann, mittels der Füllmaschine in eine Hülle gefüllt und mittels der Portioniereinrichtung portioniert. Bei den Hüllen kann es sich bevorzugt um einen Natur- oder Kunstdarm bzw. einen Collagendarm handeln. Die portionierten Lebensmittelprodukte, wie beispielsweise Würstchenketten, werden dann der entsprechenden Trennmaschine zugeführt.

Ferner werden Trennmaschinen der eingangs genannten Art zur Herstellung kleiner Chargen mit einem Fülltisch verwendet und die Lebensmittelprodukte einfach von Hand in die Transporteinrichtung der Trennmaschine eingeführt.

Trennmaschinen weisen eine Schneideinrichtung, zum Vereinzeln der Lebensmittelprodukte durch Trennen einer vordefinierten Position auf. Das Trennen erfolgt bevorzugt mittels mindestens eines Schneidmessers. So können beispielsweise Würstchenketten an den jeweiligen Abdrehstellen getrennt und so vereinzelt werden. Die Trennmaschinen weisen zum Transport der Lebensmittelprodukte hin zu der Schneideinrichtung bzw. weg von der Schneideinrichtung ferner eine oder mehrere Transporteinrichtungen auf, die jeweils eine oder mehrere Transporteinheiten umfassen. Die Transporteinheiten weisen zumeist einen Transportriemen, mindestens eine Umlenkrolle zum Führen und Umlenken des Transportriemens und eine Führung zum Führen des Transportriemens auf. Die Führungen weisen zumeist eine ebene Auflagefläche zum flächigen Stützen des Transportriemens auf, sodass dieser in dem Kontaktbereich mit dem Lebensmittelprodukt in Kontakt tritt. Das Lebensmittelprodukt wird auf diese Weise geführt transportiert, sodass das Trennen des Lebensmittelproduktes an einer vordefinierten Position erfolgen kann.

Aufgrund von produktionsbedingten Variationen der äußeren Abmessungen kann es zu einem erhöhten Druck auf die Oberfläche des Lebensmittelproduktes kommen. Bei den variierenden äußeren Abmessungen kann es sich beispielsweise um den Querschnitt oder den Durchmesser des Lebensmittelproduktes, welcher bei Würstchen als Kaliber bezeichnet wird, handeln. Ferner kommt es insbesondere bei Lebensmittelprodukte mit einem Naturdarm standardmäßig zu einer Krümmung des Lebensmittelproduktes, sodass durch die sich in Transportrichtung T in Kontaktbereich erstreckenden Transportriemen lokal ein erhöhter Druck auf das Lebensmittelprodukt ausgeübt wird. Dieser Druck und die daraus resultierende Reibung zwischen Transportriemen und der Führung reduziert die Transportgeschwindigkeit und kann zur Beschädigung des Lebensmittelproduktes führen.

Aufgabe der vorliegenden Erfindung ist es daher den Transport von Lebensmittelprodukten mit variierenden Abmessungen und/oder Krümmungen in einer Trennmaschine bzw. einer Transporteinrichtung für eine selbige und in einer Nahrungsmittelmaschine mit einer solchen Trennmaschine zu verbessern, sodass zumindest der Ausschuss an beschädigten Lebensmitteln insgesamt reduziert wird oder die Transportgeschwindigkeit zumindest nicht beeinflusst wird.

Die Erfindung löst die eingangs genannte Aufgabe durch eine Trennmaschine nach Anspruch 1. Die Erfindung löst die eingangs genannte Aufgabe dadurch, dass die mindestens eine Führung einen ersten Stützabschnitt zum Abstützen des Transportriemens auf einer ersten Höhe h₁ und einen zweiten Stützabschnitt zum Abstützen des Transportriemens auf einer zweiten Höhe h₂ aufweist, wobei die Höhe h₁ und h₂ in einer sich senkrecht zur Transportrichtung T erstreckenden Richtung h beabstandet sind, und die Transporteinheit ferner mindestens eine zwischen der ersten Höhe h₁ und der zweiten Höhe h₂ angeordnete Ausnehmung aufweist, in welche der Transportriemen aufgrund eines Kontakts mit einem Lebensmittelprodukt mindestens teilweise ausweichen kann.

Durch die Ausnehmung zwischen der ersten Höhe h₁ und der zweiten Höhe h₂ wird ein Bereich bereitgestellt, in welchen der Transportriemen aufgrund eines Kontaktes mit einem Lebensmittelprodukt mindestens teilweise ausweichen kann. Dies ist beispielsweise dann der Fall, wenn Lebensmittelprodukte mit einer Krümmung oder einem zu großen Kaliber bzw. einem zu großen Durchmesser von der Transporteinrichtung transportiert werden. Die Spannung des Transportriemens ist bevorzugt derart zu wählen, dass dieser aufgrund eines Kontaktes mit einem Lebensmittelprodukt derart verformt wird, dass er mindestens teilweise in die Ausnehmung ausweichen kann, ohne das Lebensmittelprodukt zu beschädigen. Der Abstand zwischen der Höhe h₁ und der Höhe h₂ korrespondiert bevorzugt zum Durchmesser bzw. der Höhe in Richtung h des zu transportierenden Lebensmittels, sodass es entlang der gesamten Höhe abgestützt wird von dem Transportriemen und der Führung.

Im Sinne der Erfindung ist mindestens eine Führung zum Führen des Transportriemens in Kontaktbereich notwendig. Bevorzugt kann auch eine Mehrzahl von Führungen zum Führen des Transportriemens vorgesehen sein, welche vorzugsweise den Transportriemen in Kontaktbereich abschnittsweise führen. Weiterhin können der erste Stützabschnitt und der zweite Stützabschnitt sowohl integral an einer Führung ausgebildet sein, als auch an zwei separaten Führungsteilen einer zweiteiligen Führung.

Bevorzugt handelt es sich bei der Richtung h um die Vertikale und die Transportrichtung T verläuft in horizontaler Richtung.

Im Bereich des ersten Stützabschnitts und/oder zweiten Stützabschnitts kann der Transportriemen einen punktuellen Kontakt zu dem Stützabschnitt und/oder einen Linienkontakt und/oder einen Flächenkontakt, entlang einer vordefinierten Länge des Stützabschnitts in Transportrichtung T aufweisen. Dementsprechend ist unter der ersten Höhe h₁ und der zweiten Höhe h₂ entweder ein diskreter Wert zu verstehen und die Abstützung erfolgt durch einen punktuellen Kontakt bzw. einen Linienkontakt oder aber einen die jeweilige Höhe h₁ bzw. h₂ einschließenden Wertebereich. Im Falle eines flächigen Kontakts ist ein erster, die Höhe h₁ einschließender Wertebereich in Richtung h beabstandet zu einem zweiten, die Höhe h₂ einschließenden Wertebereich angeordnet. Durch den ersten Stützabschnitt und den zweiten Stützabschnitt wird der Transportriemen an zwei Positionen, nämlich der Höhe h₁ und der Höhe h₂, bzw. zwei die jeweilige Höhe einschließenden Bereichen abgestützt und somit ausreichend gehalten, um die Lebensmittelprodukte in Transportrichtung T transportieren zu können.

Bevorzugt ist der Transportriemen mit einem Antrieb gekoppelt, welcher der Transporteinrichtung zugeordnet ist.

Gemäß einer bevorzugten Ausführungsform weist mindestens eine Führung die Ausnehmung auf, welche zwischen dem ersten Stützabschnitt und dem zweiten Stützabschnitt der Führung angeordnet ist, sodass der Transportriemen aufgrund eines Kontakts mit einem Lebensmittelprodukt zumindest teilweise in die Ausnehmung ausweichen kann. Somit ist die Führung in einfacher Weise herzustellen und umfasst neben dem ersten Stützabschnitt und den zweiten Stützabschnitt auch die Ausnehmung. In einer sich senkrecht zur Transportrichtung erstreckenden Ebene weist die Führung somit auf ihrer dem Transportriemen zugewandten Seite eine Ausnehmung auf und ist insbesondere konkav geformt. Die Ausnehmung kann bevorzugt eine korrespondierend zum Lebensmittelprodukt ausgebildete Form aufweisen. In Fällen in denen Würstchen transportiert werden, kann die Ausnehmung beispielsweise durch einen sich zwischen dem ersten Stützabschnitt und dem zweiten Stützabschnitt erstreckenden Kreisbogen definiert werden, welcher konkav gekrümmt ist. In weiteren Ausführungsvarianten können beispielsweise auch Ausnehmungen mit einer polygonalen Form vorgesehen sein.

Gemäß einer weiteren bevorzugten Ausführungsform weist die mindestens eine Führung einen ersten Führungsteil mit dem ersten Stützabschnitt und einen zweiten Führungsteil mit dem zweiten Stützabschnitt auf. Die Ausnehmung ist dabei bevorzugt zwischen dem ersten Führungsteil und den zweiten Führungsteil angeordnet. Somit wird eine zweiteilige Führung bereitgestellt, welche den Transportriemen in Bereich des ersten Stützabschnitts und des zweiten Stützabschnitts führt. Vorzugsweise kann die Ausnehmung dabei zumindest teilweise durch einen Hohlraum bzw. einen nicht anderweitig genutzten Gehäusebereich zwischen dem ersten Führungsteil und dem zweiten Führungsteil bereitgestellt werden.

Gemäß einer bevorzugten Ausführungsform kann der erste Führungsteil und/oder der zweite Führungsteil jeweils als ein Führungsblech ausgebildet sein, welches sich zumindest abschnittsweise in Transportrichtung T erstreckt und dazu eingerichtet ist, den Transportriemen abzustützen. Ferner kann eine Kombination verschiedener Führungsteile, beispielsweise Führungsrollen und Führungsblechen vorgesehen sein. Durch eine zweitteilige Führung kann die Herstellung der Führung insgesamt vereinfacht werden und Standartkomponenten, wie beispielsweise Rollen oder Bleche genutzt werden.

Vorzugsweise ist die Transporteinheit eine erste Transporteinheit und die Transporteinrichtung weist eine im Kontaktbereich parallel und beabstandet zu der ersten Transporteinheit angeordnete zweite Transporteinheit auf. Somit können die Lebensmittel von zwei Seiten gleichmäßig abgestützt und mittels der jeweiligen Transportriemen transportiert werden. Die erste Transporteinheit und die zweie Transporteinheit sind bevorzugt in Bezug auf eine durch die Transportrichtung T und die Richtung h gebildete Ebene spiegelsymmetrisch ausgebildet und angeordnet.

Gemäß einer alternativen bevorzugten Ausführungsform weist die Transporteinrichtung eine mit der Transporteinheit kooperierende Aufnahme auf, welche im Kontaktbereich parallel und beabstandet zu der Transporteinheit angeordnet ist. Somit wird das zu transportierende Lebensmittel zwischen der Transporteinheit und der kooperierenden Aufnahme gehalten und durch die Bewegung des Transportriemens entlang der Aufnahme in Transportrichtung T bewegt. Somit wird die Konstruktion der Trennmaschine vereinfacht und die Herstellungskosten sowie Wartungskosten reduziert.

Vorzugsweise ist mindestens eine Führung als eine Führungsrolle ausgebildet, die drehbar um eine sich in Richtung h erstreckende Drehachse gelagert ist. Bevorzugt verläuft die Richtung h in vertikaler Richtung, sodass die Führungsrolle um eine vertikale Achse drehbar gelagert ist. Somit wird der Widerstand beim Führen des Transportriemens durch die lediglich auftretende Rollreibung zwischen Führungsrolle und Transportriemen reduziert. Die Transportgeschwindigkeit bleibt somit beim Transport von Lebensmittelprodukten z.B. mit einem zu großen Durchmesser bei gleichbleibender Antriebsleistung konstant und wird nicht nachteilig beeinflusst. Weiter bevorzugt kann eine zweiteilig ausgebildete Führung mit einem ersten Führungsteil und einem zweiten Führungsteil als ein paar konzentrischer Führungsrollen mit korrespondierenden Durchmessern ausgebildet sein.

Im Sinne der Erfindung kann eine solche Führungsrolle dazu eingerichtet sein, den Transportriemen zu Führen und umzuleiten. In diesem Fall erfüllt die Führungsrolle gleichzeitig die Funktion einer Umlenkrolle.

Weiter bevorzugt weisen die Führungsrolle und/oder die Umlenkrolle einen in Richtung h variierenden Durchmesser auf, der an dem ersten Stützabschnitt und/oder dem zweiten Stützabschnitt ein Maximum d_{Max} annimmt. Somit steht der Bereich des ersten und/oder zweiten Stützabschnitts gegenüber dem übrigen Teil der Führungsrolle und/oder Umlenkrolle derart vor, dass dazwischen eine Ausnehmung ausgebildet wird, in welche der Transportriemen ausweichen kann. Insbesondre kann die jeweilige Führungsrolle und/oder Umlenkrolle einen maximalen Durchmesser d_{Max} im Bereich des ersten Stützabschnitts und des zweiten Stützabschnitts aufweisen. Alternativ können beispielsweise auch eine erste Führungsrolle mit einem maximalen Durchmesser d_{Max} im Bereich des ersten Stützabschnitts und eine zweite Führungsrolle mit einem maximalen Durchmesser d_{Max} im Bereich des zweiten Stützabschnitts vorgesehen sein. Entsprechend kann es sich auch bei der Umlenkrolle um eine erste Umlenkrolle mit einem maximalen Durchmesser d_{Max} im Bereich des ersten Stützabschnitts handeln und ferner eine zweite Umlenkrolle mit einem maximalen Durchmesser d_{Max} im Bereich des zweiten Stützabschnitts vorgesehen sein. Somit können auch die Umlenkrollen einen ersten Stützabschnitt und/oder einen zweiten Stützabschnitt aufweisen. Somit kann der Transportriemen auch im Bereich der jeweiligen Umlenkrolle in eine Ausnehmung aufgrund des Kontaktes mit einem Lebensmittelprodukt ausweichen.

Besonders bevorzugt sind die Führungsrolle und/oder die Umlenkrolle als konkave Rollen ausgebildet. Die sanften Übergänge einer konkaven Rolle vermeiden Spanungsspitzen und erhöhte Reibung am Transportriemen.

Gemäß einer weiteren bevorzugten Ausführungsform ist mindestens eine Führung als ein Leitblech ausgebildet, mit einer ersten sich in Transportrichtung erstreckenden Längskante und einer zweiten parallel und beabstandet zu der ersten Längskante verlaufenden zweiten Längskante, und wobei der erste Stützabschnitt durch die erste Längskante ausgebildet wird und/oder der zweite Stützabschnitt durch die zweite Längskante ausgebildet wird. Ein solches Leitblech erstreckt sich bevorzugt in Transportrichtung T im Kontaktbereich.

Vorzugsweise kann eine erste Führung als ein Leitblech und eine zweite Führung als eine oder mehrere Führungsrollen ausgebildet, welche dem Leitblech vor- und/oder nachgeschaltet in Transportrichtung T angeordnet sind. Ein Leitblech bietet dabei eine gleichmäßige Abstützung im Bereich des ersten Stützabschnitts und/oder zweiten Stützabschnitts in Transportrichtung T, wobei die Führungsrollen gleichzeitig die Reibung reduzieren und die Transportgeschwindigkeit erhöhen. Weiter bevorzugt steht der Stützabschnitt der Führungsrollen und/oder der Umlenkrollen gegenüber dem Leitblech in Richtung des Transportriemens leicht vor, sodass im unbelasteten Zustand der Transportriemen lediglich in Kontakt mit dem ersten Stützbereich und zweiten Stützbereich der Führungsrollen tritt und lediglich Rollreibung auftritt, sodass der Verschleiß reduziert wird. Tritt der Transportriemen mit einem zu transportierenden Lebensmittel in Kontakt, kann dieser in die jeweilige Ausnehmung der Führungsrollen und/oder des Leitblechs ausweichen, wobei der Transportriemen von dem Leitblech entlang eines vordefinierten Abschnitts in Transportrichtung T gleichmäßig abgestützt wird.

Gemäß einer weiteren bevorzugten Ausführungsform ist das jeweilige Leitblech zweiteilig ausgebildet, sodass ein erster Teil des Leitblechs den ersten Stützabschnitt aufweist und ein zweiter Teil des Leitblechs den zweiten Stützabschnitt aufweist, wobei der erste Teil des Leitblechs und der zweite Teil des Leitblechs beabstandet zueinander angeordnet sind, sodass zwischen dem ersten Teil des Leitblechs und dem zweiten Teil des Leitblechs die Ausnehmung ausgebildet ist. Vorzugsweise ist das zweitteilige Leitblech zwischen zwei benachbarten Führungsrollen und/oder zwei benachbarten Umlenkrollen angeordnet.

Vorzugsweise weist der Transportriemen eine Höhe h_{T} und die mindestens eine Führung eine Höhe h_{F} in Richtung h auf, die größer ist, als die Höhe h_{T} des Transportriemens. Somit wird der Transportriemen auch bei einer Lageabweichung in Richtung h zuverlässig geführt und abgestützt. Bevorzugt kann die jeweilige Führungsrolle und/oder Umlenkrolle einen ersten endseitigen Abschnitt aufweisen, welcher einen Anschlag zur Fixierung des Transportriemens in Richtung h aufweist, und einen korrespondierend ausgebildeten zweiten endseitigen Abschnitt, welcher einen zweiten Anschlag aufweist. Somit wird der Transportriemen in Richtung h sicher gehalten.

Weiter bevorzugt weist mindestens eine Führung einen metallischen Werkstoff, insbesondere Stahl auf. Somit weist die Führung eine ausreichende Festigkeit zum Führen und sicheren Abstützen des Transportriemens auf.

Weiter bevorzugt weist der Transportriemen ein Elastomer auf. Somit ist der Transportriemen verschleißbeständig und ausreichend elastisch, um durch elastische Verformung aufgrund des Kontakts mit einem Lebensmittelprodukt in die Ausnehmung ausweichen zu können, ohne das Lebensmittelprodukt zu beschädigen.

Die Erfindung wurde vorstehend in einem ersten Aspekt beschrieben. Die Erfindung betrifft in einem zweiten Aspekt eine Transporteinrichtung für eine Trennmaschine, insbesondere für eine Trennmaschine gemäß dem ersten Aspekt der Erfindung mit einem Transportriemen, welcher sich in einem Kontaktbereich zumindest abschnittsweise in einer Transportrichtung T erstreckt und dazu eingerichtet ist, in dem Kontaktbereich mit dem Lebensmittelprodukten in Kontakt zu kommen, mindestens einer Umlenkrolle zum Führen des Transportriemens, und mindestens einer Führung zum Führen des Transportriemens in Kontaktbereich. Die Erfindung löst die eingangs genannte Aufgabe in Bezug auf eine Transporteinrichtung dadurch, dass die mindestens eine Führung einen ersten Stützabschnitt zum Abstützen des Transportriemens auf einer ersten Höhe h₁ und einen zweiten Stützabschnitt zum Abstützen des Transportriemens auf einer zweiten Höhe h₂ aufweist, wobei die Höhe h₁ und die Höhe h₂ in einer sich senkrecht zur Transportrichtung T erstreckenden Richtung beabstandet sind und die Transporteinheit ferner mindestens eine zwischen der ersten Höhe h₁ und der zweiten Höhe h₂ angeordnete Ausnehmung aufweist, in welche der Transportriemen aufgrund eines Kontaktes mit einem Lebensmittelprodukt mindestens teilweise ausweichen kann. Die erfindungsgemäße Transporteinrichtung macht sich die vorstehend in Bezug auf eine Trennmaschine mit einer solchen Transportvorrichtung beschriebenen Vorteile zu eigen. Bevorzugte Ausführungsformen des ersten Aspektes der Erfindung sind ebenso bevorzugte Ausführungsformen gemäß dem zweiten Aspekt der Erfindung.

Die Erfindung betrifft in einem dritten Aspekt eine Nahrungsmittelmaschine zur Herstellung eines Lebensmittelproduktes, mit einer Füllmaschine, zum Aufnehmen eines pastösen Lebensmittels und Abfüllen des pastösen Lebensmittels in einer Hülle, einer Portioniereinrichtung zum Portionieren des Lebensmittels in der Hülle, und eine Trennmaschine gemäß dem ersten Aspekt der Erfindung zum Vereinzeln des portionierten Lebensmittels. Die Nahrungsmittelmaschine gemäß dem dritten Aspekt mit einer erfindungsgemäßen Trennmaschine macht sich die vorstehend in Bezug auf den ersten Aspekt der Erfindung beschriebenen Vorteile zu eigen. Bevorzugte Ausführungsformen gemäß dem ersten Aspekt der Erfindung sind ebenso bevorzugte Ausführungsformen gemäß dem dritten Aspekt der Erfindung.

Weitere Merkmale, Vorteile und Unteraspekte der vorstehenden beschriebenen Aspekte der Erfindung ergeben sich aus der nachfolgenden Beschreibung der Figuren, die bevorzugte Ausführungsformen der Erfindung zeigen. Dabei zeigen:
- Fig. 1a:: einen Ausschnitt einer Trennmaschine gemäß dem Stand der Technik mit Lebensmittelprodukten einer zu kleinen Abmessung,
- Fig. 1b:: einen Ausschnitt einer Transporteinrichtung gemäß dem Stand der Technik mit Lebensmittelprodukten einer zu kleinen Abmessung,
- Fig. 2a:: die Trennmaschine gemäß Figur 1a mit Lebensmittelprodukten einer zu großen Abmessung,
- Fig. 2b: die Transporteinrichtung gemäß Figur 1b mit Lebensmittelprodukten mit einer zu großen Abmessung,
- Fig. 3:: eine erfindungsgemäße Nahrungsmittelmaschine,
- Fig. 4a:: eine erste Ausführungsform der erfindungsgemäßen Transporteinrichtung in einen unbelasteten Zustand in einer Schnittansicht,
- Fig. 4b:: die Transporteinrichtung gemäß Figur 4a mit einem darin transportierten Lebensmittelprodukt,
- Fig. 5a:: eine zweite Ausführungsform der erfindungsgemäßen Transporteinrichtung in einem unbelasteten Zustand in einer Schnittansicht,
- Fig. 5b:: die Transporteinrichtung gemäß Figur 5a mit einem darin transportierten Lebensmittelprodukt,
- Fig. 6:: eine Trennmaschine gemäß einer ersten Ausführungsform der Erfindung in einer perspektivischen Ansicht,
- Fig. 7a:: einen Teil einer Transporteinheit gemäß einer ersten Ausführungsform der Erfindung in einer perspektivischen Ansicht,
- Fig. 7b:: die Transporteinheit gemäß Figur 7a in einer Seitenansicht,
- Fig. 8a:: einen Teil einer erfindungsgemäßen Transporteinheit gemäß einer zweiten Ausführungsform der Erfindung in einer perspektivischen Ansicht,
- Fig. 8b:: die Transporteinheit gemäß Figur 8a in einer Seitenansicht, und
- Fig. 9:: ein Teil einer Transporteinheit gemäß einer dritten bevorzugten Ausführungsform der Erfindung in einer perspektivischen Ansicht.

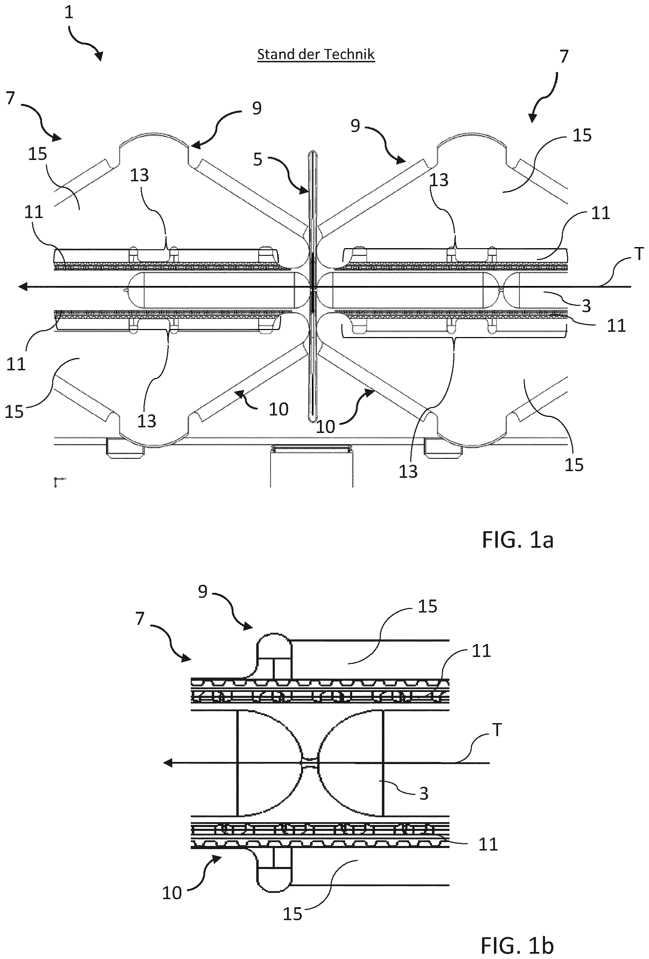

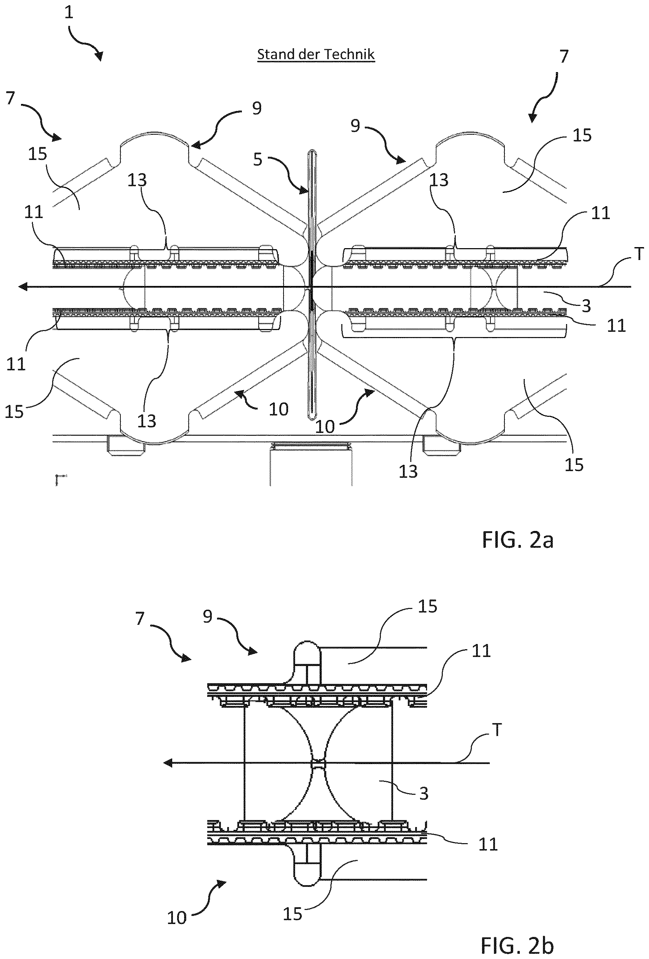

Die Figuren 1a, 1b, 2a und 2b zeigen eine Trennmaschine 1 bzw. eine Transporteinrichtung 7 für eine solche Trennmaschine nach dem Stand der Technik. In dem gezeigten Ausführungsbeispiel ist das Lebensmittelprodukt 3 eine Wurst bzw. Würstchenkette, mit einem Durchmesser, der als Kaliber bezeichnet wird.

Derartige Trennmaschinen 1 weisen ferner mindestens eine der Schneideinrichtung 5 vorgeschaltete Transporteinrichtung 7 zum Transportieren des Lebensmittelproduktes 3 in einer Transportrichtung T auf. Bevorzugt weisen solche Trennmaschinen 1 ferner einer zweite, der Schneideinrichtung 5 nachgeschaltete Transporteinrichtung 7 auf, welche dazu eingerichtet ist, die durch die Schneideinrichtung 5 vereinzelten Lebensmittelprodukte 3 zur Weiterverarbeitung in Transportrichtung T zu transportieren.

Die Transporteinrichtung 7, welche in Figur 1b in Detail gezeigt ist, weist jeweils zwei Transporteinheiten 9, 10 auf, jeweils mit einem Transportriemen 11, welcher mit dem Lebensmittelprodukt in einem Kontaktbereich 13 in Kontakt tritt. Die beiden Transporteinheiten 9, 10 verlaufen im Kontaktbereich 13 parallel und beabstandet zueinander. Die Transporteinheiten 9, 10 weisen jeweils eine Führung 15 zum Führen des Transportriemens 11 in Kontaktbereich 13 auf, die dazu eingerichtet sind den Transportriemen 11 derart zu führen, dass dieser sich im Kontaktbereich 13 zumindest abschnittsweise in Transportrichtung T erstreckt.

Die in der Figur 2a gezeigte Trennmaschine 1 entspricht der in Figur 1a gezeigten Trennmaschine und die in Figur 2b gezeigte Transporteinrichtung entspricht der in Figur 1b gezeigten Transporteinrichtung. Die Figuren 1a, 1b und 2a, 2b unterscheiden sich lediglich durch die Abmessung des Lebensmittelproduktes 3, insbesondere durch die Kalibergröße, also den Durchmesser des Lebensmittelproduktes 3.

In Figur 1a und 1b weist das Lebensmittelprodukt 3 ein Kaliber auf, welches kleiner ist, als der Abstand der beiden Transportriemen 11, der parallel und beabstandet angeordneten Transporteinheiten 9, 10. Dieser Abstand ist vorzugsweise einstellbar, allerdings können produktionsbedingte Schwankungen der Kaliber auftreten. Beim Transport von Lebensmittelprodukten 3 mit einem zu kleinem Kaliber, wie in Figur 1a und 1b gezeigt, kommen diese im Kontaktbereich 13 nicht ausreichend mit dem Transportriemen 11 in Kontakt und können so z.B. in der Schneideinrichtung 5 nicht exakt positioniert werden.

In den Figuren 2a und 2b weist das Lebensmittelprodukt 3 einen Durchmesser auf, welcher größer ist, als der Abstand der beiden Transportriemen 11, der parallel und beabstandet zueinander angeordneten Transporteinheiten 9, 10. In diesem Fall wird durch die Transportriemen 11 und die Führung 15 ein erhöhter Druck auf das Lebensmittelprodukt 3 ausgeübt, wodurch dies beschädigt werden kann. Ferner wird die Reibung des Transportriemens 11 an der Führung 15 durch das Lebensmittelprodukt 3 erhöht, sodass die Transportgeschwindigkeit in Transportrichtung T reduziert wird.

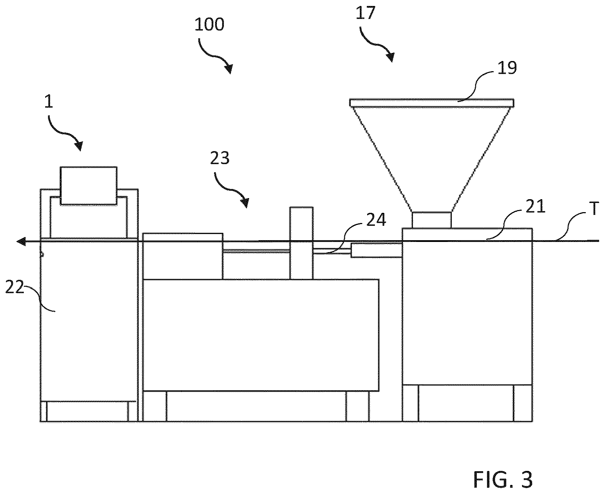

Figur 3 zeigt eine erfindungsgemäße Nahrungsmittelmaschine 100 mit einer Trennmaschine 1, einer Füllmaschine 17 und einer zwischen Füllmaschine 17 und Trennmaschine 1 angeordneten Portioniereinrichtung 23. Die Portioniereinrichtung 23 und die Trennmaschine 1 sind stromabwärts der Füllmaschine 17 angeordnet.

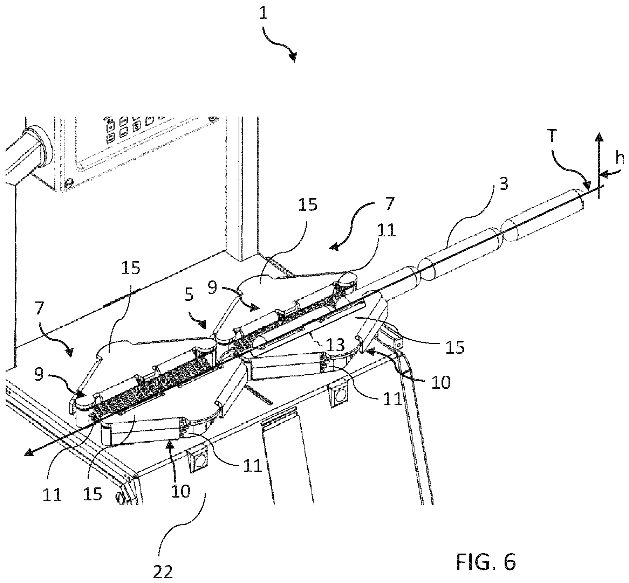

Die Füllmaschine 17 weist einen Trichter 19 und ein Gehäuse 21 auf. Die Trennmaschine 1 weist ebenfalls ein Gehäuse 22 auf, welches zumindest teilweise zur Aufnahme der Schneideinrichtung 5 ausgebildet ist und auf welchem die Transporteinrichtung 7 zumindest abschnittsweise angeordnet ist (vgl. Figur 6).

Bevorzugt kann ein pastöses Lebensmittelprodukt ist von der Trennmaschine 17 über ein Füllrohr 24 in eine Hülle abgefüllt und anschließend von der Portioniereinrichtung 23 portioniert werden. Bei der Hülle kann es sich vorzugsweise um einen Natur- oder Kunstdarm handeln und bei dem in die Füllmaschine 17 einbringbaren pastösen Lebensmittelprodukt um ein Wurstbrät oder eine vegane bzw. vegetarische Alternative. In diesem Fall handelt es sich bei dem fertigen Lebensmittelprodukt 3 um Würstchen, wobei die Portioniereinrichtung 23 eine Abdrehlinie zum Abdrehen der Wursthülle umfasst. Die entstehenden Würstchenketten werden anschließend mittels der Trennmaschine 1 vereinzelt.

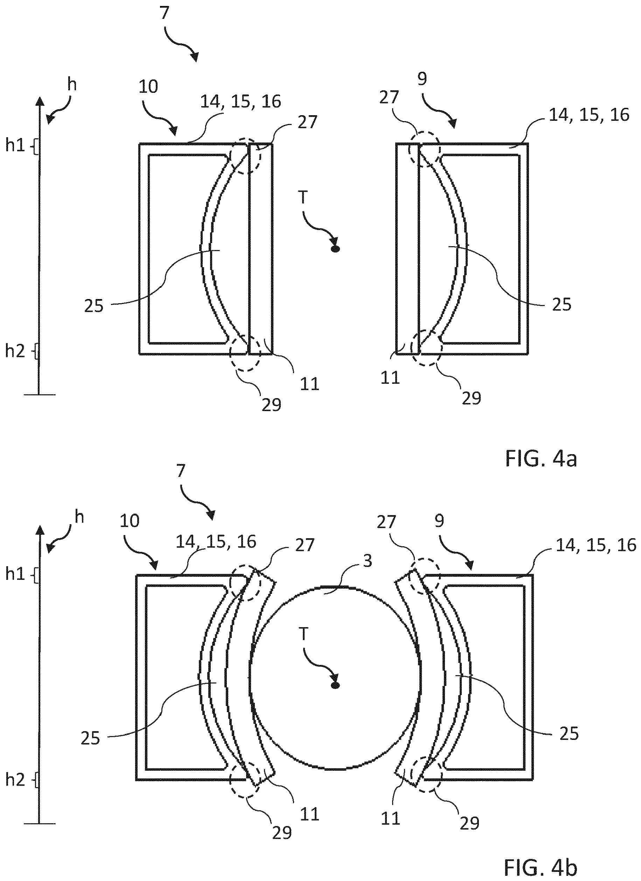

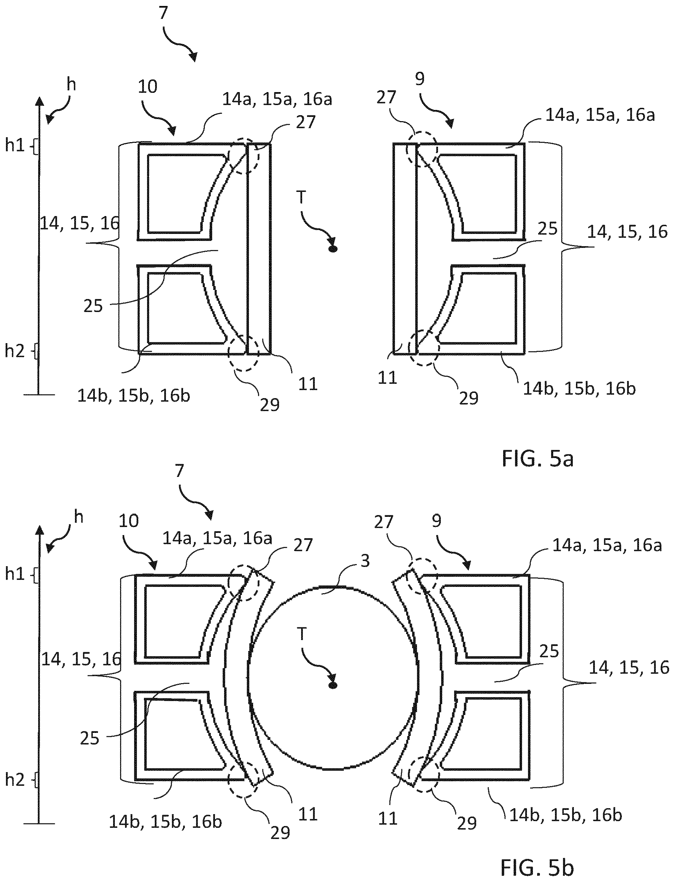

Die Figuren 4a, 4b, 5a und 5b zeigen schematisch Ausführungsformen der Transporteinrichtung 7.

Figur 4a zeigt eine erste Ausführungsform der erfindungsgemäßen Transporteinrichtung 7 in einem unbelasteten Zustand und Figur 4b zeigt entsprechend die Transporteinrichtung 7 in einem betasteten Zustand, in welchem das Lebensmittelprodukt 3 mit der Transporteinrichtung 7 in Kontakt tritt. Die Transporteinrichtung 7 ist in einer Schnittansicht gezeigt, wobei sich die Schnittebene orthogonal zur Transportrichtung T erstreckt.

Die Transporteinrichtung 7 umfasst zwei parallel und beabstandet zueinander angeordnete Transporteinheiten 9, 10. Die Transporteinheiten 9, 10 weisen jeweils einen Transportriemen 11 auf, welcher bevorzugt ein Elastomer umfasst, und eine Führung 14, 15, 16 zum Führen des Transportriemens 11 im Kontaktbereich 13 (vgl. Fig. 6).

Der Transportriemen 11 weist in der gezeigten, sich orthogonal zur Transportrichtung T erstreckenden Schnittebene, eine bevorzugte Dicke kleiner 5 mm auf und eine Höhe, welche an die Höhe des Lebensmittelproduktes 3 und die Höhe der Führung 14, 15, 16 angepasst ist auf. Die Führung 14, 15, 16 weist jeweils eine Ausnehmung 25 auf, in welche der Transportriemen 11 beim Kontakt mit dem Lebensmittelprodukt 3 ausweichen kann. Die Ausnehmung 25 ist zwischen einem ersten Stützabschnitt 27 und einem zweiten Stützabschnitt 29 der Führung 14, 15, 16 angeordnet.

Der erste Stützabschnitt 27 ist dazu eingerichtet, den Transportriemen 11 auf einer ersten Höhe h₁ abzustützen und der zweite Stützabschnitt 29 ist dazu eingerichtet, den Transportriemen 11 auf einer zweiten Höhe h₂ abzustützen. Die Höhe h₁ und die Höhe h₂ sind in einer Richtung h beabstandet zueinander angeordnet. Im Sinne der Erfindung sind unter den Höhen h₁ und h₂ sowohl diskrete Werte, als auch Wertebereiche zu verstehen, in welchen der Transportriemen 11 durch den jeweiligen Stützabschnitt 27, 29 abgestützt wird. So kann die Höhe h₁ beispielsweise einen Bereich von 1 - 20 mm umfassen, in welchem der Transportriemen 11 durch den oberen Stützabschnitt 27 abgestützt wird. Selbiges gilt auch für die Höhe h₂.

Wie insbesondere in Figur 4b gezeigt, kann der Transportriemen 11 aufgrund eines Kontaktes mit einem Lebensmittelprodukt 3, welches in Transportrichtung T mittels der Transporteinrichtung 7 transportiert wird, in die jeweilige Ausnehmung 25 der Transporteinheit 9, 10 ausweichen. In dem gezeigten Ausführungsbeispiel ist die Führung 14, 15, 16 einteilig und konkav ausgebildet in Bezug auf die gezeigte Schnittebene, sodass die Ausnehmung 25 durch die konkave Form integral an der Führung 14, 15, 16 zwischen dem ersten Stützabschnitt 27 und dem zweiten Stützabschnitt 29 ausgebildet ist.

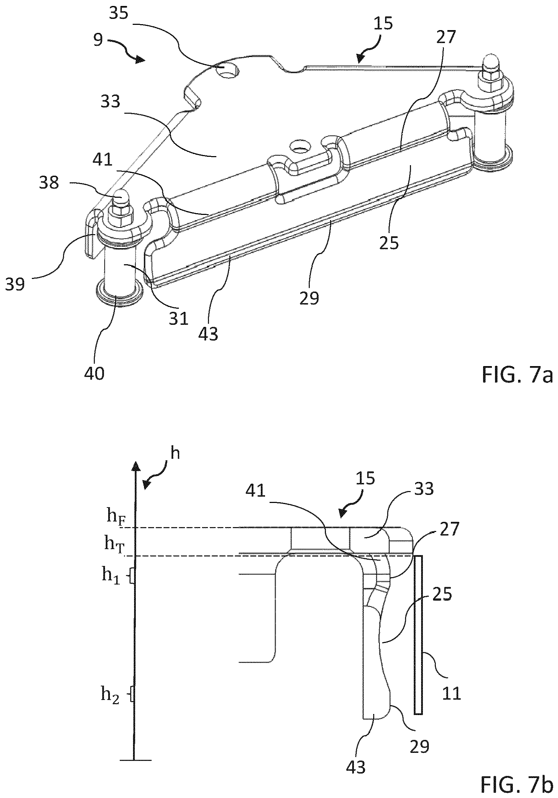

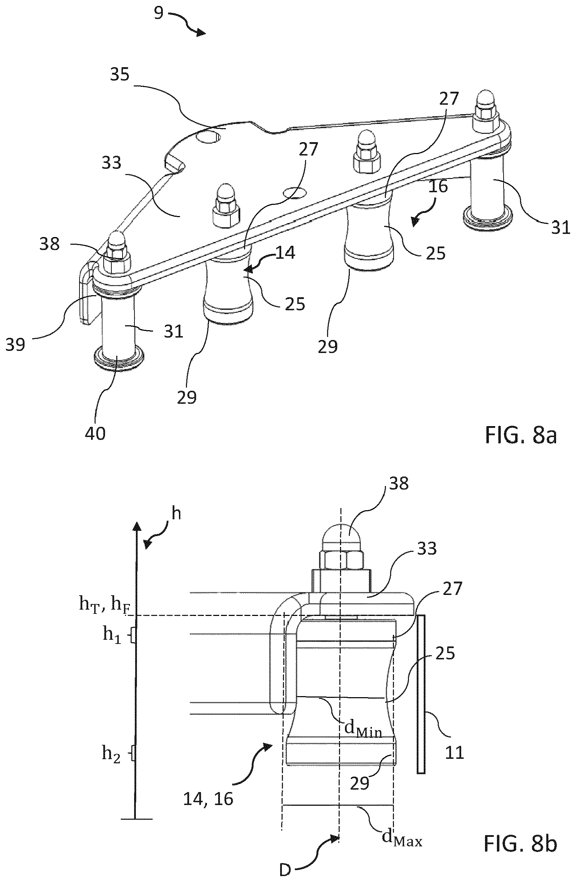

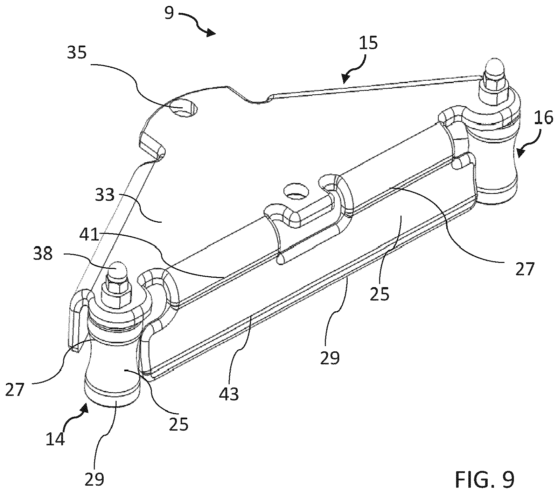

In dem in den Figuren 4a und 4b gezeigten Ausführungsbeispiel kann die Führung jede Form aufweisen, die geeignet ist, den Transportriemen auf der Höhe h₁ und der Höhe h₂ zu führen und zugleich eine Ausnehmung 25 aufweist. Vorzugsweise ist die Führung als Führungsblech 15 (vgl. Fig. 7a, 7b, 9) oder Führungsrolle 14, 16 (vgl. Fig. 8a, 8b, 9) ausgebildet.

Das in den Figuren 5a und 5b gezeigte Ausführungsbeispiel unterscheidet sich von den in Figuren 4a und 4b gezeigten Ausführungsbeispiel dadurch, dass die Führung 14, 15, 16 zweiteilig ausgebildet ist, mit einem ersten Führungsteil 14a, 15a, 16a und einem zweiten Führungsteil 14b, 15b, 16b. Der erste Führungsteil 14a, 15a, 16a weist den ersten Stützabschnitt 27 zum Abstützen des Transportriemens 11 auf der ersten Höhe h₁ auf und der zweite Führungsteil 14b, 15b, 16b weist den zweiten Stützabschnitt 29 zum Abstützen des Transportriemens 11 auf der ersten Höhe h₂ auf. Die Ausnehmung 25 ist in diesem Ausführungsbeispiel zumindest abschnittweise zwischen dem ersten Führungsteil 14a, 15a 16a und dem zweiten Führungsteil 15b, 14b, 15b, 16b ausgebildet, sodass der Transportriemen 11 aufgrund eines Kontaktes mit dem zu transportierenden Lebensmittel 3 zumindest teilweise auch in die Ausnehmung zwischen dem ersten Führungsteil 14a, 15a, 16a und dem zweiten Führungsteil 15b, 14b, 15b, 16b ausweichen kann.

In dem in den Figuren 5a und 5b gezeigten Ausführungsbeispiel kann die Führung bzw. die Führungsteile jede Form aufweisen, die geeignet ist, den Transportriemen auf der Höhe h₁ und der Höhe h₂ zu führen und zugleich eine Ausnehmung 25 aufweist. Vorzugsweise ist die Führung als Führungsblech 15 (vgl. Fig. 7a, 7b, 9) oder Führungsrolle 14, 16 (vgl. Fig. 8a, 8b, 9) ausgebildet.

Figur 6 zeigt die erfindungsgemäße Trennmaschine 1 gemäß einer ersten bevorzugten Ausführungsform. Die Trennmaschine 1 ist zum Transportieren von Lebensmittelprodukten 3 vorzugsweise Würstchen, in einer Transportrichtung T eingerichtet.

Die Trennmaschine 1 umfasst eine Schneideinrichtung 5, eine erste der Schneideinrichtung vorgeschaltete Transporteinrichtung 7 und eine zweite der Schneideinrichtung 5 nachgeschaltete Transporteinrichtung 7. Die der Schneideinrichtung 5 vorgeschaltete Transporteinrichtung 7 und die der Schneideinrichtung 5 nachgeschaltete Transporteinrichtung 7 sind bevorzugt identisch ausgebildet.

Gemäß dem gezeigten Ausführungsbespiel weist jede Transporteinrichtung 7 zwei Transporteinheiten 9, 10 auf, die bevorzugt identische Teile aufweisen und insbesondere spiegelsymmetrisch ausgebildet sind. Die erste Transporteinheit 9 und die zweite Transporteinheit 10 sind in Kontaktbereich 13 parallel und beabstandet zueinander angeordnet, sodass sie in Bezug auf eine durch die Transportrichtung T und eine Höhenrichtung h gebildete Spiegelebene symmetrisch ausgebildet sind. Die Lebensmittelprodukte 3 sind zum Transport in Transportrichtung T zwischen der ersten Transporteinheit 9 und der zweiten Transporteinheit 10 aufgenommen.

Jede Transporteinheit 9, 10 weist einen Transportriemen 11 auf, welcher sich zumindest abschnittsweise im Kontaktbereich 13 in Transportrichtung erstreckt, und eine Führung 15 zum Führen des Transportriemens 11 auf. Die der Schneideinrichtung 5 nachgeschaltete Transporteinrichtung 7 ist bevorzugt identisch zu der Transporteinrichtung 7, welche der Schneideinrichtung 5 vorgeschaltet ist, ausgebildet. Beide Transporteinrichtungen 7 sind bevorzugt, zumindest abschnittsweise auf einem Gehäuse 22 der Trennmaschine 11 angeordnet.

Die Transporteinheiten 9, 10 weisen ferner jeweils mindestens eine Umlenkrolle 31 zum Führen und Umlenken des Transportriemens 11 auf. Die Umlenkrollen 31 sind drehbar um eine sich in Richtung h erstreckende Drehachse gelagert. Die Führung 15 weist eine Trägerplatte 33 mit einer Anzahl von Durchgangsbohrungen 35 auf, welche dazu eingerichtet sind, Verbindungsmittel 38 zum Verbinden der Umlenkrollen 31 mit der Trägerplatte 33 aufzunehmen. Die Umlenkrollen 31 weisen jeweils einen ersten Anschlag 39 und einen zweiten in Richtung h beabstandeten Anschlag 40 auf, wobei der Transportriemen 11 (vgl. Figur 7b) zwischen dem ersten Anschlag 39 und dem zweiten Anschlag 40 entlang der Umlenkrolle 31 geführt wird, wobei die Anschläge 39, 40 eine Relativbewegung des Transportriemens 11 in Richtung h verhindern.

Die Führung 15 weist im Kontaktbereich 13 (vgl. Figur 6) eine erste sich in Transportrichtung T erstreckende Längskante 41 auf, welche den ersten Stützabschnitt 27 ausbildet. Ferner weist die Führung 15 eine zweite sich in Transportrichtung T erstreckende Längskante 43 auf, welche den zweiten Stützabschnitt 29 bietet. Die Führung 15 ist zwischen dem ersten Stützabschnitt und dem zweiten Stützabschnitt konkav in Bezug auf den Transportriemen 11 ausgebildet, sodass die Ausnehmung 25 integral an der Führung 15 bereitgestellt wird, wie insbesondere Figur 7b zeigt.

Wie Figur 7b ferner zeigt, weist die Führung 15 eine Höhe h_{F} und der Transportriemen eine Höhe h_{T} in Richtung h auf, wobei die Höhe h_{F} die Höhe h_{T} übersteigt.

Die Figuren 8a und 8b zeigen ein zweites bevorzugtes Ausführungsbeispiel der erfindungsgemäßen Transporteinheit 9.

Die Transporteinheit 9 gemäß den Figuren 8a und 8b unterscheidet sich von dem ersten in den Figuren 7a und 7b gezeigten Ausführungsbeispiel durch die Ausbildung der Führung, welche hier als eine Anzahl von Führungsrollen 14, 16 ausgebildet sind.

Die erste Führungsrolle 14 und die zweite Führungsrolle 16 sind jeweils um eine sich in Richtung h erstreckende Drehachse drehbar an der Trägerplatte 33 gelagert.

Die Trägerplatte 33 weist Durchgangsbohrungen 35 auf, die dazu eingerichtet sind, Verbindungsmittel 38 durchzuführen. Mittels der Durchgangsbohrungen 35 und der korrespondierenden Verbindungsmittel 38 sind sowohl mindestens eine Umlenkrolle 31, als auch mindestens eine Führungsrolle 14, 16 mit der Trägerplatte 33 koppelbar. Die Umlenkrollen 31 weisen auch in diesem Ausführungsbeispiel in bekannter Weise einen oberen Anschlag 39 und einen unteren Anschlag 40 auf.

In der Seitenansicht gemäß Figur 8b ist zur besseren Übersicht lediglich eine Führungsrolle 14, 16 gezeigt und die in dieser Ansicht der Führungsrolle vorgeschaltete Umlenkrolle 31 ausgeblendet. Die Führungsrolle 14, 16 ist um eine Drehachse D drehbar gelagert und weist einen oberen Stützabschnitt 27 zum Abstützen des Transportriemens 11 auf einer ersten Höhe h₁ auf und einen zweiten Stützabschnitt 29 zum Abstützen des Transportriemens 11 auf einer zweiten Höhe h₂. Die Führungsrollen 14, 16 sind als konkave Rolle ausgebildet, sodass zwischen dem ersten Stützabschnitt 27 und dem zweiten Stützabschnitt 29 die Ausnehmung 25 integral an der jeweiligen Führungsrolle 14, 16 ausgebildet ist.

Die Führungsrollen 14, 16 weisen jeweils bevorzugt einen in Richtung h variierenden Durchmesser auf, welcher im Bereich des ersten Stützabschnitts 27 bzw. der Höhe h₁ ein Maximum d_{Max} annimmt und im Bereich des zweiten Stützabschnitts 29 bzw. der Höhe h₂ ein zweites Maximum d_{Max} annimmt. Im Bereich der Aufnahme, vorzugsweise mittig zwischen der Höhe h₁ und der Höhe h₂, weisen die Führungsrollen 14, 16 einen minimalen Durchmesser d_{Min} auf. Der Transportriemen 11 kann somit aufgrund eines Kontakts mit einem Lebensmittelprodukt 3 in die durch die Führungsrolle 14, 16 bereitgestellte Ausnehmung 25 ausweichen. Dadurch, dass zwischen den Führungsrollen 14, 16 und dem Transportriemen 11 lediglich Rollreibung herrscht, wird die Reibung minimiert und die Transportgeschwindigkeit durch das Ausweichen des Transportriemens 11 in die Ausnehmung 25 nur geringfügig beeinflusst.

Figur 9 zeigt eine dritte Ausführungsform der erfindungsgemäßen Transporteinheit 9. Die in Figur 9 gezeigte Ausführungsform unterscheidet sich von den in den Figuren 7a und 7b bzw. 8a und 8b gezeigten Ausführungsformen dadurch, dass eine erste Führung 15 als ein Leitblech ausgebildet ist und eine zweite Führung als zwei Führungsrollen 14, 16 ausgebildet ist, wobei das Leitblech 15 und die Führungsrollen 14, 16 jeweils einen ersten Stützabschnitt 27 zum Abstützen des Lebensmittelproduktes auf einer ersten Höhe h₁, einen zweiten Stützabschnitt 29 zum Abstützen des Lebensmittelproduktes auf einer zweiten Höhe h₂ und eine zwischen dem ersten Stützabschnitt 27 und dem zweiten Stützabschnitt 29 angeordnete Ausnehmung 25 aufweisen.

Das Leitblech 15 ist zwischen den beiden Führungsrollen 14, 16 angeordnet. In dieser bevorzugten Ausführungsform kann der Transportriemen 11 (vgl. Figur 6) auch beim Eintreten bzw. Austreten in die Transporteinrichtung 7 durch die Führungsrollen 14, 16 derart abgestützt werden, dass er aufgrund eines Kontaktes mit einem zu großen oder gekrümmten Lebensmittelprodukt 3 in die Ausnehmung 25 der Führungsrollen 14, 16 ausweichen kann. Somit wird auch in diesem Bereich eine Beschädigung des Lebensmittelproduktes 3 verhindert.

Die Ausbildung der als Leitblech ausgebildeten Führung 15 entspricht in allen Merkmalen der Ausbildung der Führung gemäß den in den Figuren 7a und 7b gezeigten Ausführungsbeispiele.

Die Ausbildung der Führungsrollen 14, 16 entspricht der Ausbildung der Führungsrollen 14, 16 in dem in den Figuren 8a und 8b gezeigten Ausführungsbeispiel. Durch die zwei kooperierenden Führungen 14, 15, 16 wird der Transportriemen 11 zuverlässig im gesamten Kontaktbereich 13 (vgl. Figur 6) abgestützt und dies insbesondere auch im Bereich des Eingangs bzw. Auslasses der jeweiligen Transporteinrichtung 7.

Im Sinne der Erfindung können die in den Figuren 7a bis 9 gezeigten Transporteinheit 9 sowohl gemeinsam mit einer korrespondierend ausgebildeten zweiten Transporteinheit 10 verwendet werden, wobei die Transporteinheiten 9, 10 jeweils paarweise parallel und beabstandet im Kontaktbereich 13 angeordnet sind, sodass das Lebensmittelprodukt 3 zwischen ihnen aufgenommen ist. Weiterhin können die in den Figuren 7a bis 9 gezeigten Transporteinheiten 9 auch kombiniert verwendet werden, sodass eine erste Transporteinheit 9 beispielsweise dem ersten Ausführungsbeispiel entspricht und eine zweite Transporteinheit 10, die parallel und beabstandet im Kontaktbereich 13 zu der ersten Transporteinheit 9 angeordnet ist, den in den Figuren 8a und 8b gezeigten Ausführungsbeispielen entspricht.

Weiterhin ist im Sinne der Erfindung vorgesehen, dass die in den Figuren 7a bis 9 gezeigten Transporteinheiten 9 auch mit einer nicht näher gezeigten Aufnahme verwendet werden. Eine solche Aufnahme kann beispielsweise durch eine Führungsschiene oder ein Leitblech bereitgestellt werden, welches die Lebensmittelprodukte 3 relativ zu der Transporteinheit 9 führt, wobei die Transportbewegung in Transportrichtung T allein durch die Reibung zwischen dem Transportriemen 11 der Transporteinheiten 9 und dem Lebensmittelprodukt 3 erfolgt. Eine solche Aufnahme hat bevorzugt eine reibungsarme Oberflächenbeschichtung.

### Bezugszeichenliste

- 1: Trennmaschine
- 3: Lebensmittelprodukt
- 5: Schneideinrichtung
- 7: Transporteinrichtung
- 9: erste Transporteinheit
- 10: zweite Transporteinheit
- 11: Transportriemen
- 13: Kontaktbereich
- 14: Führung, erste Führungsrolle
- 15: Führung, Leitblech
- 14a, 15a, 16a: erster Führungsteil
- 14b, 15b, 16b: zweiter Führungsteil
- 16: Führung, zweite Führungsrolle
- 17: Füllmaschine
- 19: Trichter
- 21: Gehäuse-Füllmaschine
- 22: Gehäuse-Trennmaschine
- 23: Portioniereinrichtung
- 24: Füllrohr
- 25: Ausnehmung
- 27: erster Stützabschnitt
- 29: zweiter Stützabschnitt
- 31: Umlenkrolle
- 33: Trägerplatte
- 35: Bohrung
- 38: Verbindungsmittel
- 39: erster Anschlag
- 40: zweiter Anschlag
- 41: erste Längskante
- 43: zweite Längskante
- 100: Nahrungsmittelmaschine
- T: Transportrichtung
- h: Richtung
- h₁: erste Höhe
- h₂: zweite Höhe
- h_{F}: Höhe Füllrohr
- h_{T}: Höhe Transportriemen
- D: Drehachse
- d_{Max}: maximaler Durchmesser
- d_{Min}: minimaler Durchmesser

## Patentansprüche

1. Trennmaschine (1) zum Vereinzeln von Lebensmittelprodukten (3), insbesondere Wurstketten, umfassend:
- eine Schneideinrichtung (5) zum Vereinzeln der Lebensmittelprodukte (3; und
- eine mit der Schneideinrichtung (5) kooperierende Transporteinrichtung (7) zum Transportieren der Lebensmittelprodukte (3) in einer Transportrichtung (T),
wobei die Transporteinrichtung (7) mindestens eine Transporteinheit (9, 10) umfasst; mit
- einem Transportriemen (11), welcher sich in einem Kontaktbereich (13) zumindest abschnittweise in Transportrichtung (T) erstreckt und dazu eingerichtet ist, in dem Kontaktbereich (13) mit den Lebensmittelprodukten (3) in Kontakt zu kommen,
- mindestens einer Umlenkrolle (31) zum Führen des Transportriemens (11),
- mindestens eine Führung (14, 15, 16) zum Führen des Transportriemens (11) im Kontaktbereich (13),
**dadurch gekennzeichnet, dass** die mindestens eine Führung (14, 15, 16) einen ersten Stützabschnitt (27) zum Abstützen des Transportriemens (11) auf einer ersten Höhe (hi) und einen zweiten Stützabschnitt (29) zum Abstützen des Transportriemens (11) auf einer zweiten Höhe (h₂) aufweist,
wobei die Höhe (hi) und die Höhe (h₂) in einer sich senkrecht zur Transportrichtung (T) erstreckenden Richtung (h) beabstandet sind, und die Transporteinheit (9, 10) ferner mindestens eine zwischen der ersten Höhe (hi) und der zweiten Höhe (h₂) angeordnete Ausnehmung (25) aufweist, in welche der Transportriemen (11) aufgrund eines Kontaktes mit einem Lebensmittelprodukt (3) mindestens teilweise ausweichen kann.

2. Trennmaschine (1) nach Anspruch 1,
wobei mindestens eine Führung (14, 15, 16) die Ausnehmung (25) aufweist, welche zwischen dem ersten Stützabschnitt (27) und dem zweiten Stützabschnitt (29) der Führung (14, 15, 16) angeordnet ist, sodass der Transportriemen (11) aufgrund eines Kontaktes mit einem Lebensmittelprodukt (3) zumindest teilweise in die Ausnehmung (25) ausweichen kann.

3. Trennmaschine (1) nach Anspruch 1 oder 2,
wobei mindestens eine Führung (14, 15, 16) einen ersten Führungsteil (14a, 15a, 16a) mit dem ersten Stützabschnitt (27) und einen zweiten Führungsteil (14b, 15b, 16b) mit dem zweiten Stützabschnitt (29) aufweist und die Ausnehmung (25) zwischen dem ersten Führungsteil (14a, 15a, 16a) und dem zweiten Führungsteil (14b, 15b, 16b) angeordnet ist.

4. Trennmaschine (1) nach einem der vorstehenden Ansprüche,
wobei die Transporteinheit (9) eine erste Transporteinheit (9) ist und die Transporteinrichtung (7) eine im Kontaktbereich (13) parallel und beabstandet zu der ersten Transporteinheit (9) angeordnete zweite Transporteinheit (10) aufweist.

5. Trennmaschine (1) nach einem der Ansprüche 1 bis 3,
wobei die Transporteinrichtung (7) eine mit der Transporteinheit (9) kooperierende Aufnahme aufweist, welche im Kontaktbereich (13) parallel und beanstandet zu der Transporteinheit (9) angeordnet ist.

6. Trennmaschine (1) nach einem der vorstehenden Ansprüche,
wobei mindestens eine Führung (14, 16) als eine Führungsrolle ausgebildet ist, die drehbar um eine sich in Richtung (h) erstreckende Drehachse (D) gelagert ist.

7. Trennmaschine (1) nach Anspruch 6,
wobei die Führungsrolle (14, 16) und/oder die Umlenkrolle (31) einen in Richtung (h) variierenden Durchmesser aufweisen, der an dem ersten Stützabschnitt (27) und/oder an dem zweiten Stützabschnitt (29) ein Maximum (d_{Max}) annimmt.

8. Trennmaschine (1) nach Anspruch 6 oder 7,
wobei die Führungsrolle (14, 16) und/oder die Umlenkrolle (31) als konkave Rolle ausgebildet ist

9. Trennmaschine (1) nach einem der vorstehenden Ansprüche,
wobei mindestens eine Führung (15) als ein Leitblech ausgebildet ist, mit einer ersten sich in Transportrichtung (T) erstreckenden Längskante (41) und einer zweiten parallel und beabstandet zu der ersten Längskante (41) verlaufenden zweiten Längskante (43), und
wobei der erste Stützabschnitt (27) durch die erste Längskante (41) ausgebildet wird und/oder der zweite Stützabschnitt (29) durch die zweite Längskante (43) ausgebildet wird.

10. Trennmaschine (1) nach Anspruch 9,
wobei das Leitblech (15) zwischen zwei benachbarten Führungsrollen (14, 16) angeordnet ist.

11. Trennmaschine (1) nach einem der vorstehenden Ansprüche,
wobei der Transportriemen (11) eine Höhe (h_{T}) und die mindestens eine Führung (14, 15, 16) eine Höhe (h_{F}) in Richtung h aufweist, die größer ist, als die Höhe (h_{T}) des Transportriemens (11).

12. Transporteinrichtung (7) für eine Trennmaschine (1), insbesondere eine Trennmaschine (1) nach einem der vorstehenden Ansprüche, mit
- einem Transportriemen (11), welcher sich in einem Kontaktbereich (13) zumindest abschnittweise in Transportrichtung (T) erstreckt und dazu eingerichtet ist, in dem Kontaktbereich (13) mit den Lebensmittelprodukten (3) in Kontakt zu kommen,
- mindestens einer Umlenkrolle (31) zum Führen des Transportriemens (11),
- mindestens eine Führung (14, 15, 16) zum Führen des Transportriemens (11) im Kontaktbereich (13),
**dadurch gekennzeichnet, dass** die mindestens eine Führung (14, 15, 16) einen ersten Stützabschnitt (27) zum Abstützen des Transportriemens (11) auf einer ersten Höhe (hi) und einen zweiten Stützabschnitt (29) zum Abstützen des Transportriemens (11) auf einer zweiten Höhe (h₂) aufweist,
wobei die Höhe (hi) und die Höhe (h₂) in einer sich senkrecht zur Transportrichtung (T) erstreckenden Richtung (h) beabstandet sind, und die Transporteinheit (9, 10) ferner mindestens eine zwischen der ersten Höhe (hi) und der zweiten Höhe (h₂) angeordnete Ausnehmung (25) aufweist, in welche der Transportriemen (11) aufgrund eines Kontaktes mit einem Lebensmittelprodukt (3) mindestens teilweise ausweichen kann.

13. Nahrungsmittelmaschine (100) zur Herstellung eines Lebensmittelproduktes (3), mit
- einer Füllmaschine (17), zum Aufnehmen eines pastösen Lebensmittels und Abfüllen des pastösen Lebensmittels, insbesondere in einer Hülle,
- einer Portioniereinrichtung (23) zum Portionieren des Lebensmittels (3), insbesondere in der Hülle, und
- einer Trennmaschine (1) nach einem der Ansprüche 1 bis 11.
